# EUROPEAN PATENT SPECIFICATION

(11) **EP 1 661 098 B1**
(45) Date of publication and mention of the grant of the patent: **30.04.2008**
(21) Application number: 04744817.0
(22) Date of filing: 23.08.2004
(51) Int. Cl.: G08B 13/14

(54) **Personal proximity network**
Persönliches Proximitätsnetzwerk
Réseau de proximité personnel

(30) Priority: 25.08.2003 US 497661 P
(43) Date of publication of application: 31.05.2006
(73) Proprietor: Koninklijke Philips Electronics N.V., 5621 BA Eindhoven (NL)
(72) Inventor: PLAMOOTTIL, Thomas, J., NL-5621 BA Eindhoven (NL)
(74) Representative: Groenendaal, Antonius W. M.
(86) International application number: PCT/IB2004/051536
(87) International publication number: WO 2005/020172

(56) References cited:
- EP-A- 1 164 555
- EP-A- 1 172 778
- WO-A-01/08116
- US-B1- 6 515 588

## Description

The present invention relates generally to a personal proximity network, and more particularly, to a wireless communication network between a master object associated with a person and slave objects belonging to the person for tracking the proximity of the slave objects relative to the master object carried by the person.

Most people carry a number of belongings on (or close to) their body, e.g., cellular phone, car keys, wallet, laptop computer, and/or a personal digital assistant (PDA). Therefore, there is a risk of forgetting or losing one or more of these belongings at a certain location, for example, leaving your wallet or pocketbook at a restaurant. The risk is greater in the case of travelers and tourists who carry many possessions with them, such as digital camera, video camera, and luggage in addition to the belongings discussed above.

It is known in the art for a person to carry an electronic tag to track and control the movement of the person. It is also known in the art (U.S. Patent No. 6,563,27) to communicate between a master and slave device to locate a person carrying the slave device. However such a system is complicated due to the necessity for each slave device to transmit an identification signal to the master device.

Another system that solves this problem is disclosed in EP1164555.

Therefore it is an object of the present invention to provide a personal proximity network for determining whether objects associated with a person leave a predetermined proximity surrounding a master object carried by the person.

This object is achieved with a method according to claim 1, a system according to claim 6, a master object according to claim 12 and a computer program according to claim 17.

Other advantageous refinements of the invention are defined in dependent claims 2 to 5, 7 to 11, and 13 to 16.

These and other features, aspects, and advantages of the apparatus and methods of the present invention will become better understood with regard to the following description, appended claims, and accompanying drawings where:
Figure 1 illustrates a schematic view of an embodiment of a system for tracking the proximity of at least one slave object relative to a master object associated with a person.
Figure 2 illustrates a schematic view of an embodiment of a master unit of Figure 1.
Figure 3 illustrates a schematic view of an embodiment of a slave unit of Figure 1.

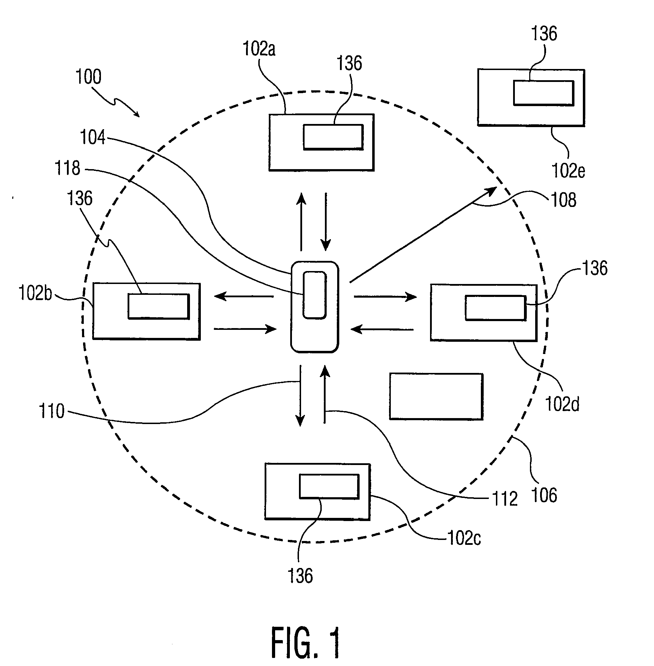

Referring now to Figure 1, there is shown a system for tracking the proximity of one or more slave objects 102a-102e to a master object 104 associated with a person, the system being generally referred to by reference numeral 100. The system 100 generally operates within a proximity boundary 106 that is within a predetermined distance 108 of the master object 104. The master object 104 is any device or object that is typically carried by a person, such as a cellular telephone or wristwatch. Although, it is preferred that the master object 104 be an electronic device, it can also be an object having an attached master device, such as a pocketbook having the master object 104 attached thereto. The slave objects 102a-102e are generally personal belongings of the person carrying the master object 104 and can be electronic devices or other objects, such as a personal digital assistant (PDA) 102a, a set of keys 102b, a wallet 102c, a laptop computer 102d, and a pocketbook 102e.

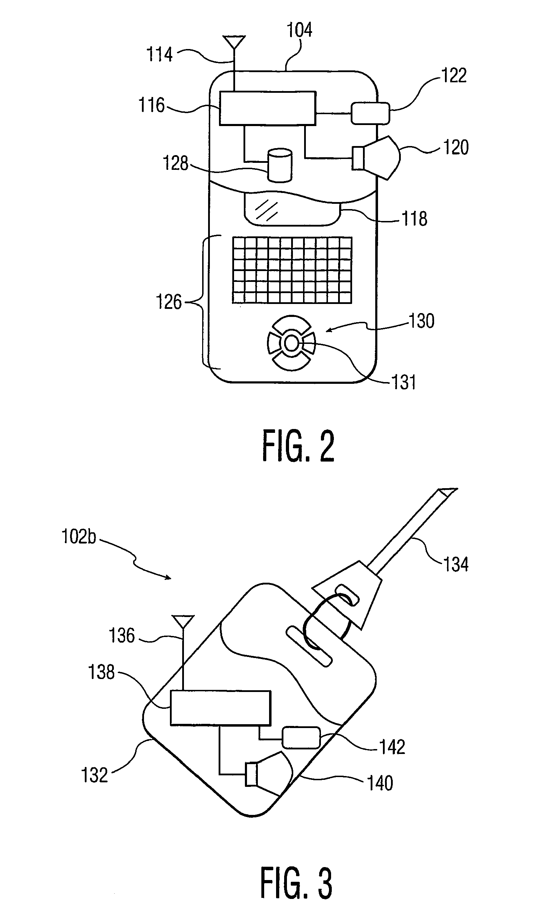

Referring also to Figure 2, the master object 104 includes means for periodically wirelessly transmitting a signal 110 (referred to herein as a roll call) within the predetermined distance to the slave objects 102a-102e and for receiving a response 112 to the signal 110 if the slave objects 102a-102e are within the proximity boundary 106. Such means can be a Radio Frequency Identification (RFID) transmitter 114 (shown schematically in Figure 2 by antenna 114) or a Bluetooth transmitter. Both RFID and Bluetooth are well known in the art and a detailed description of each is omitted for the sake of brevity. Although RFID or Bluetooth are preferred because they operate on well-known standards, any wireless transmission means can be employed. Furthermore, although the RFID 114 or Bluetooth transmission means can be a separate device from the master object 104, it is preferred that the same be integral with the device, such as in a cellular telephone. In the case of a cellular telephone, the same already has a wireless transmission means for communicating with other phones and/or a base station. Thus, the wireless transmission means provided in the cellular telephone can also be used to send the signal 110 to the slave objects 102a-102e and receive the response 112. Although it is preferred that the signal 110 be sent periodically, e.g., every 30 seconds, to conserve a battery (not shown) which powers the master device 104, the signal can also be constantly transmitted.

The master device 104 also has a processor 116 for generating the signal, which is then transmitted by the antenna 114. The processor 116 also determines whether a response is received from each of the slave objects 102a-102e, and demodulates and formats the received response 112 (if necessary). Where more than one slave object 102a-102e is used, the processor 116 receives signals of different characteristics (e.g., frequency) and is able to distinguish between the received signals and correspond each of the received signals with a different slave object 102a-102e. Such information regarding the slave objects 102a-102e and their distinguishing communication characteristics is preferably stored in a memory 128 in the master device 104. The processor 116 also has a warning means for warning the person if it is determined that the response 112 is not received from any of the slave objects 102a-102e. The warning can be produced textually on a display 118 included in the master object 104. The warning can also be an audible alarm reproduced on a speaker 120 included in the master object 104. Furthermore, the warning can be a visible alarm displayed by an LED 122 or other light-emitting device included in the master object 104. Although, each of the warning means described above can be used separately to warn the person that one or more of the slave objects 102a-102e are outside the proximity boundary 106, it is preferred that they be used in combination. For example, the processor 116 can instruct the speaker to provide an audible warning and also display the warning on the display 118. For example, if the person leaves her pocketbook 102e in a restaurant, when she leaves the restaurant and enters her car (which is outside the predermined distance from the pocketbook 102e) the pocket book 102e will fail to respond to the signal 110 and the master object 104 will warn the person, such as by sounding a beep on the speaker 120 and displaying "Pocketbook outside proximity area" on the display 118. The person can then go back into the restaurant to retrieve her pocketbook 102e.

The length of the predetermined distance 108 (i.e., the size of the proximity network) can be varied, for example by varying the strength of the signal 110 transmitted. However, it is preferred that the size of the proximity network (e.g., the distance between the proximity boundary 106 and the master unit 104 carried by the person) remain relatively small so that the person can easily retrieve a slave object 102a-102e that becomes detached from the network (i.e., located outside the proximity boundary 106). That is, the warning that a slave object 102a-102e is detached should come while the person is fairy close to the detached slave object 102a-102e so that he or she can easily retrieve it before leaving the general vicinity of the detached slave object 102a-102e.

The master object 104 further has means for inputting data and instructions to the processor 116, such as buttons and keypads 126 and for displaying a user interface on the display 118. The buttons and keypads 126 are preferably those that are also used during the normal functioning of the master device 104. In the case of a cellular telephone, the buttons and keypads 126 are also used to operate the cellular phone, such as to make a telephone call or program phone numbers into the cellular telephone's memory 128. The processor 116 preferably controls all of the functions described above with regard to the master object 104. Interaction with the user interface displayed on the display 118 can be through a directional keypad 130 having up, down, right, and left buttons as well as a central "enter" button 131. The use of such directional keypads 130 is well known in the art. In addition to the functions described above, the buttons and keypads 126 and user interface can be used to add and/or delete slave objects 102a-102e to or from the system 100. Alternatively, the slave objects 102a-102e can be added automatically by simultaneously depressing a button on both a slave object 102a-102e and master object 104 in which case the slave object transmits a signal with a particular characteristic, such as frequency. Where the particular characteristic is the frequency of the response 112, the master object 104 determines the frequency and logs the slave object with such a frequency into the memory 128 of the master object 104. Where the master object 104 is an electronic device, such as a cellular telephone, the processor preferably controls the normal functions of the device as well as the functions of the master object 104 described above. Where the master object 104 is attachable to an object, such as a pocketbook, the processor 116 can be dedicated to controlling the functions described above.

Where there is a plurality of slave objects 102a-102e, the processor 116 of the master object can determine which of the plurality of slave objects 102a-102e is within the predetermined distance 108 and transmit signals 110 only to those slave objects 102a-102e that are determined to be within the predetermined distance 108. For example, one of the buttons and keypads 126 can be a "find all" key which when depressed registers only those slave objects 102a-102e that are within the predetermined distance 108 (i.e., which provide a response 112). Any slave objects 102a-102e that are not registered are then ignored until the "find all" button is depressed again or the system is reset. Ignoring a slave object 102a-102e can mean that the signal 110 is not transmitted to the ignored slave objects 102a-102e and/or sending a signal to all of the slave objects 102a-102e but ignoring whether a response from the ignored slave objects 102a-102e is received. For example, in Figure 1 the pocketbook 102e is outside the predetermined distance and thus the master object 104 will warn the person of such. However, if the person purposely leaves her pocketbook home one day, she can depress the "find all" key and eliminate the pocketbook 102e from the system 100 once she (and the master object 104) is far enough away from home such that the pocketbook 102e will not be within the predetermined distance 108. Alternatively, the slave object 102e can have an on/off switch (not shown). In such a configuration, the pocketbook 102e can be turned off and the "find all" button depressed. The system 100 will then ignore the pocketbook 102e because it will not transmit the response 112. In still another alternative, the person can simply remove the pocketbook 102e from the system 100 using a graphical interface and buttons and keypads 126 on the master unit. In this way, the person can add all of his belongings to the system 100 and selectively include those slave objects 102a-102e that he/she is using at a particular time.

The master object 104 can also have means for indicating one of the slave objects 102a-102e as being temporarily removable outside the predetermined distance 108 and warning the person that such a slave object 102a-102e is outside the predetermined distance 108 in a different manner than if another second slave object 102a-102e is outside the predetermined distance. For example, the slave object may be a piece of luggage. If the person is taking a train trip, the luggage can be identified as being temporarily removable from the system 100 by use of a graphical interface on the master object 104. Thus, when the luggage is stored in the train's luggage car and the person goes to his/her seat in another car (which is outside the predetermined distance from the luggage car), the master object 104 can issue a different warning than it would if another of the slave objects (e.g., his/her wallet 102c) was determined to be outside the predetermined distance 108. For example, the master unit 104 can produce a short beep on the speaker 120 to acknowledge that the luggage was temporarily detached from the system 100 and reproduce a longer and/or louder beep on the speaker 120 if any other of the slave objects 102a-102e is determined to be outside the predetermined distance from the master object 104. Similarly, the master object 104 can again warn the person when the detached slave object is again attached to the system 100.

Referring now also to Figure 3, there is illustrated a slave object 102b in the form of a key fob 132 for holding keys 134. Each slave object 102a-102e, including slave object 102b has a wireless receiver 136 for receiving the signal 110 from the master object 104. The slave object 102a-102e can be an electronic device or an object having a device that provides the functions of the slave object attached thereto. As discussed above, the receiver can be an RFID tag or a Bluetooth beacon, shown schematically in Figure 1 by box 136 and in Figure 3 by antenna 136. The RFID tag or Bluetooth beacon 136 can be integral with the slave object 102a-102e or attached to a slave object, such as a pocketbook 102e. Non-electronic devices can also be slave objects and manufactured with the electronics necessary to carry out the functions of the slave objects 102a-102e, for example by sewing the electronics into a lining of a pocketbook. The slave object 102a-102e further has a processor 138 for receiving the signal 110 from the master object 104, demodulating and formatting the same, if necessary, and transmitting the response 112 to the master object 104 if the signal 110 is received by the slave object 102a-102e. It is assumed that the transmitter 114 of the master object 104 has a range equivalent to the predetermined distance 108. Therefore, if the slave object 102a-102e receives the signal 110 from the master object 104, it is assumed that the slave object 102a-102e is within the predetermined distance 108 from the master object 104.

The processor 138 of the slave object 102a-102e can also determine whether the slave object 102a-102e has received the signal 110 within a predetermined time period and warn the person if it is determined that the slave object 102a-102e has not received the signal 110 within the predetermined time period. The warning can be similar to that described above with regard to the master object 104, such as producing and audio warning on a speaker 140 or a visible warning on an LED 142, both of which are under the control of the processor 138. For example, if the person loses the master object 104, the system becomes useless in the sense that the person has no further way of knowing about the slave objects 102a-102e. Thus, one or more of the slave objects 102a-102e can warn the person if it does not receive the roll-call (signal 110) within the predetermined time period (e.g., 1 minute) which means that the master object 104 is itself missing.

The methods of the present invention are particularly suited to be carried out by a computer software program, such computer software program preferably containing modules corresponding to the individual steps of the methods. Such software can of course be embodied in a computer-readable medium, such as an integrated chip or a peripheral device.

## Claims

1. A method for tracking the proximity of at least one slave object (102a-102e) to a master object (104) associated with a person, wherein the at least one slave object comprises first and second slave objects, the method comprising:
(a) providing the master (104) and at least one slave object (102a-102e) with a wireless communication means (116, 114, 136, 138) operating within a predetermined distance (108) from the master object (104);
(b) periodically signaling (110) the at least one slave object (102a-102e);
(c) determining if the at least one slave object (102a-102e) is within the predetermined distance (108);
(d) warning the person if the at least one slave object (102a-102e) is determined not to be within the predetermined distance (108);
(e) indicating the first slave object (102e) as being temporarily removable outside the predetermined distance (108); and
(f) warning the person that the first slave object (102e) is outside the predetermined distance (108) in a different manner than if the second slave object (102a-102d) is outside the predetermined distance (108).

2. The method of claim 1, wherein step (c) is based upon whether a response (112) to the signaling (110) is received from the at least one slave object (102a-102e); further comprising warning the person from the master object (104) if the at least one slave object (102a-102e) is determined not to be within the predetermined distance (108).

3. The method of claim 1, further comprising indicating at least one additional object as a slave object (102a-102e).

4. The method of claim 1, further comprising:
determining whether the at least one slave object (102a-102e) has received the signaling (110) within a predetermined time period; and
warning the person from the at least one slave object (102a-102e) if it is determined that the at least one slave object (102a-102e) has not received the signaling within the predetermined time period.

5. The method of claim 1, wherein the at least one slave object (102a-102e) comprises a plurality of slave objects, the method further comprising:
determining which of the plurality of slave objects (102a-102e) is within the predetermined distance (108); and
carrying out steps (b) and (c) only for those slave objects (102a-102e) that are determined to be within the predetermined distance (108).

6. A system (100) for tracking the proximity of at least one slave object (102a-102e) to a master object (104) associated with a person, wherein the at least one slave object comprises first and second slave objects, the system comprising:
the master (104) and the at least one slave object (102a-102e) each comprising a wireless communication means (116, 114, 136, 138) operating within a predetermined distance (108) from the master object (104); the wireless communication means (114, 116) of the master object (104) comprising a wireless transmitter (114, 116) for periodically signaling (110) the at least one slave object (102a-102e);
a processor (116) for determining if the at least one slave object (102a-102e) is within the predetermined distance (108);
warning means (122, 120, 118) for warning the person if the at least one slave object (102a-102e) is determined not to be within the predetermined distance (108);
means (116, 126) for indicating the first slave object (102e) as being temporarily removable outside the predetermined distance (108); and
means (118, 120, 122) for warning the person that the first slave object (102e) is outside the predetermined distance (108) in a different manner than if the second slave object (102a-102d) is outside the predetermined distance (108).

7. The system (100) according to claim 6, the master object (104) comprising:
a wireless receiver (114) for receiving a response (112) to the signal (110);
a processor (116) for determining whether the response (112) is received from the at least one slave object (102a-102e); and
warning means (122, 120, 118) for warning the person if it is determined that the response (110) is not received from the at least one slave object (102a-102e); and
the at least one slave object (102a-102e) comprising:
- a wireless receiver (136, 138) for receiving the signal (110) from the master object (104); and
- a wireless transmitter (136, 138) for transmitting the response (112) to the master object (104) if the signal (110) is received by the at least one slave object (102a-102e).

8. The system of claim 6, the master object (104) further comprising means (116, 126) for adding at least one additional object as a slave object (102a-102e).

9. The system of claim 6, the at least one slave object (102a-102e) further comprising:
a processor (138) for determining whether the at least one slave object (102a-102e) has received the signal (110) within a predetermined time period; and
warning means (140, 142) for warning the person if it is determined that the at least one slave object (102a-102e) has not received the signal (110) within the predetermined time period.

10. The system of claim 6, wherein the at least one slave object (102a-102e) comprises a plurality of slave objects (102a-102e) and the processor (116) of the master object (104) determines which of the plurality of slave objects (102a-102e) is within the predetermined distance (108) and transmits signals (110) only to those slave objects (102a-102d) that are determined to be within the predetermined distance (108).

11. The system of claim 8, wherein the at least one slave object (102a-102e) comprises first and second slave objects, the master object (104) further comprising:
means (116, 126) for indicating the first slave object (102e) as being temporarily removable outside the predetermined distance (108); and
means (118, 120, 122) for warning the person that the first slave object (102e) is outside the predetermined distance (108) in a different manner than if the second slave object (102a-102d) is outside the predetermined distance (108).

12. A master object (104) for tracking the proximity of at least one slave object (102a-102e), wherein the at least one slave object comprises first and second slave objects, the master object (104) comprising:
a wireless transmitter (114, 116) operating within a predetermined distance (108) for periodically transmitting a signal (110) to the at least one slave object (102a-102e);
a wireless receiver (114, 116) for receiving a response (112) to the signal (110); and
a processor (116) for determining whether the response (112) is received from the at least one slave object (102a-102e);
warning means (118, 120, 122) for warning the person if it is determined that the response (112) is not received from the at least one slave object (102a-102e);
means (116, 126) for indicating the first slave object (102e) as being temporarily removable outside the predetermined distance (108); and
means (118, 120, 122) for warning the person that the first slave object (102e) is outside the predetermined distance (108) in a different manner than if the second slave object (102a-102d) is outside the predetermined distance (108).

13. The master object of claim 12, further comprising means (116, 126) for adding at least one additional object as a slave object (102a-102e).

14. The master object of claim 12, wherein the at least one slave object (102a-102e) comprises a plurality of slave objects and the processor (116) determines which of the plurality of slave objects (102a-102d) is within the predetermined distance (108) and transmits signals (110) only to those slave objects (102a-102d) that are determined to be within the predetermined distance (108).

15. The master object of claim 12, wherein the transmitter and receiver (116, 14) operate on one of RFID or Bluetooth protocols.

16. The master object of claim 12, wherein the master object comprises a cellular telephone (104).

17. A computer program product embodied in a computer-readable medium, the computer program product comprising computer readable program code means for performing the method according to claim 1.

## Patentansprüche

1. Verfahren zum Verfolgen der Nähe von mindestens einem Slave-Objekt (102a-102e) zu einem zu einer Person gehörenden Master-Objekt (104), wobei das mindestens eine Slave-Objekt erste und zweite Slave-Objekte umfasst, wobei das Verfahren die folgenden Schritte umfasst:
(a) Ausstatten des Master-Objekts (104) und des mindestens einen Slave-Objekts (102a-102e) mit einem drahtlosen Kommunikationsmittel (116, 114, 136, 138), das innerhalb einer festgelegten Reichweite (108) vom Master-Objekt (104) funktioniert;
(b) periodisches Senden von Signalen (110) an das mindestens eine Slave-Objekt (102a-102e);
(c) Ermitteln, ob das mindestens eine Slave-Objekt (102a-102e) sich innerhalb der festgelegten Reichweite (108) befindet;
(d) Warnen der Person, wenn festgestellt wird, dass sich das mindestens eine Slave-Objekt (102a-102e) nicht innerhalb der festgelegten Reichweite (108) befindet;
(e) Kenntlich machen des ersten Slave-Objekts (102e) als zeitweilig aus der festgelegten Reichweite (108) entfernbar; und
(f) Warnen der Person, dass sich das erste Slave-Objekt (102e) außerhalb der festgelegten Reichweite (108) befindet, und zwar auf eine andere Weise als wenn sich das zweite Slave-Objekt (102a-102d) außerhalb der festgelegten Reichweite (108) befindet.

2. Verfahren nach Anspruch 1, wobei Schritt (c) darauf basiert, ob eine Antwort (112) auf die Signalisierung (110) von dem mindestens einen Slave-Objekt (102a-102e) empfangen wurde; weiterhin umfassend das Warnen der Person vom Master-Objekt (104), wenn festgestellt wird, dass sich das mindestens eine Slave-Objekt (102a-102e) nicht innerhalb der festgelegten Reichweite (108) befindet.

3. Verfahren nach Anspruch 1, das weiterhin das Kenntlich machen von mindestens einem zusätzlichen Objekt als ein Slave-Objekt (102a-102e) umfasst.

4. Verfahren nach Anspruch 1, das weiterhin Folgendes umfasst:
Ermitteln, ob das mindestens eine Slave-Objekt (102a-102e) die Signalisierung (110) innerhalb einer festgelegten Zeitspanne empfangen hat; und
Warnen der Person bezüglich des mindestens einen Slave-Objekts (102a-102e), wenn festgestellt wird, dass das mindestens eine Slave-Objekt (102a-102e) die Signalisierung nicht innerhalb der festgelegten Zeitspanne empfangen hat.

5. Verfahren nach Anspruch 1, wobei das mindestens eine Slave-Objekt (102a-102e) eine Vielzahl von Slave-Objekten umfasst, wobei das Verfahren weiterhin Folgendes umfasst:
Ermitteln, welches aus der Vielzahl der Slave-Obj ekte (102a-102e) sich innerhalb der festgelegten Reichweite (108) befindet; und
Ausführen der Schritte (b) und (c) nur für diejenigen Slave-Objekte (102a-102e), von denen feststellt wurde, dass sie sich innerhalb der festgelegten Reichweite (108) befinden.

6. System (100) zum Verfolgen der Nähe von mindestens einem Slave-Objekt (102a-102e) zu einem zu einer Person gehörenden Master-Objekt (104), wobei das mindestens eine Slave-Objekt erste und zweite Slave-Objekte umfasst, wobei das System Folgendes umfasst:
das Master-Objekt (104) und das mindestens eine Slave-Objekt (102a-102e), die jeweils mit einem drahtlosen Kommunikationsmittel (116, 114, 136, 138) ausstattet sind, das innerhalb einer festgelegten Reichweite (108) vom Master-Objekt (104) funktioniert, wobei das drahtlose Kommunikationsmittel (114, 116) des Master-Objekts (104) einen drahtlosen Sender (114, 116) zum periodischen Senden von Signalen (110) an das mindestens eine Slave-Objekt (102a-102e) umfasst;
einen Prozessor (116) zum Ermitteln, ob das mindestens eine Slave-Objekt (102a-102e) sich innerhalb der festgelegten Reichweite (108) befindet;
Warnmittel (122, 120, 118) zum Warnen der Person, wenn festgestellt wird, dass sich das mindestens eine Slave-Objekt (102a-102e) nicht innerhalb der festgelegten Reichweite (108) befindet;
Mittel (116, 126) zum Kenntlich machen des ersten Slave-Objekts (102e) als zeitweilig aus der festgelegten Reichweite (108) entfernbar; und
Mittel (118, 120, 122) zum Warnen der Person, dass sich das erste Slave-Objekt (102e) außerhalb der festgelegten Reichweite (108) befindet, und zwar auf eine andere Weise als wenn sich das zweite Slave-Objekt (102a-102d) außerhalb der festgelegten Reichweite (108) befindet.

7. System (100) nach Anspruch 6, wobei das Master-Objekt (104) Folgendes umfasst:
einen drahtlosen Empfänger (114) zum Empfangen einer Antwort (112) auf das Signal (110);
einen Prozessor (116) zum Feststellen, ob die Antwort (112) von dem mindestens einen Slave-Objekt (102a-102e) empfangen wurde; und
Warnmittel (122, 120, 118) zum Warnen der Person, wenn festgestellt wird, dass die Antwort (110) nicht von dem mindestens einen Slave-Objekt (102a-102e) empfangen wurde; und wobei das mindestens eine Slave-Objekt (102a-102e) Folgendes umfasst:
einen drahtlosen Empfänger (136, 138) zum Empfangen des Signals (110) von dem Master-Objekt (104); und
einen drahtlosen Sender (136, 138) zum Senden der Antwort (112) an das Master-Objekt (104), wenn das Signal (110) durch das mindestens eine Slave-Objekt (102a-102e) empfangen wurde.

8. System nach Anspruch 6, wobei das Master-Objekt (104) weiterhin Mittel (116, 126) zum Hinzufügen von mindestens einem zusätzlichen Objekt als ein Slave-Objekt (102-102e) umfasst.

9. System nach Anspruch 6, wobei das mindestes eine Slave-Objekt (102a-102e) weiterhin Folgendes umfasst:
einen Prozessor (138) zum Feststellen, ob das mindestens eine Slave-Objekt (102a-102e) das Signal (110) innerhalb einer festgelegten Zeitspanne empfangen hat; und
Warnmittel (140, 142) zum Warnen der Person, wenn festgestellt wird, dass das mindestens eine Slave-Objekt (102a-102e) das Signal (110) nicht innerhalb der festgelegten Zeitspanne empfangen hat.

10. System nach Anspruch 6, wobei das mindestens eine Slave-Objekt (102a-102e) eine Vielzahl von Slave-Obejkten (102a-102e) umfasst und der Prozessor (116) des Master-Objekts (104) ermittelt, welches aus der Vielzahl der Slave-Objekte (102a-102e) sich innerhalb der festgelegten Reichweite (108) befindet, und Signale (110) nur an diejenigen Slave-Objekte (102a-102d) sendet, von denen festgestellt wurde, dass sie sich innerhalb der festgelegten Reichweite (108) befinden.

11. System nach Anspruch 8, wobei das mindestens eine Slave-Objekt (102a-102e) erste und zweite Slave-Objekte umfasst und das Master-Objekt (104) weiterhin Folgendes umfasst:
Mittel (116, 126) zum Kenntlich machen des ersten Slave-Objekts (102e) als zeitweilig aus der festgelegten Reichweite (108) entfernbar; und
Mittel (118, 120, 122) zum Warnen der Person, dass sich das erste Slave-Objekt (102e) außerhalb der festgelegten Reichweite (108) befindet, und zwar auf eine andere Weise als wenn sich das zweite Slave-Objekt (102a-102d) außerhalb der festgelegten Reichweite (108) befindet.

12. Master-Objekt (104) zum Verfolgen der Nähe des mindestens einen Slave-Objekts (102a-102e), wobei das mindestens eine Slave-Objekt erste und zweite Slave-Objekte umfasst und wobei das Master-Objekt (104) Folgendes umfasst:
einen drahtlosen Sender (114, 116), der innerhalb einer festgelegten Reichweite (108) funktioniert, um periodisch ein Signal (110) an das mindestens eine Slave-Objekt (102a-102e) zu senden;
einen drahtlosen Empfänger (114, 116) zum Empfangen einer Antwort (112) auf das Signal (110); und
einen Prozessor (116) zum Feststellen, ob die Antwort (112) von dem mindestens einen Slave-Objekt (102a-102e) empfangen wurde;
Warnmittel (11, 120, 122) zum Warnen der Person, wenn festgestellt wird, dass die Antwort (112) nicht von dem mindestens einen Slave-Objekt (102a-102e) empfangen wurde;
Mittel (116, 126) zum Kenntlich machen des ersten Slave-Objekts (102e) als zeitweilig aus der festgelegten Reichweite (108) entfernbar; und
Mittel (118, 120, 122) zum Warnen der Person, dass sich das erste Slave-Objekt (102e) außerhalb der festgelegten Reichweite (108) befindet, und zwar auf eine andere Weise als wenn sich das zweite Slave-Objekt (102a-102d) außerhalb der festgelegten Reichweite (108) befindet.

13. Master-Objekt nach Anspruch 12, das weiterhin Mittel (116, 126) zum Hinzufügen von mindestens einem zusätzlichen Objekt als ein Slave-Objekt (102a-102e) umfasst.

14. Master-Objekt nach Anspruch 12, wobei das mindestens eine Slave-Objekt (102a-102e) eine Vielzahl von Slave-Objekten umfasst und der Prozessor (116) ermittelt, welches aus der Vielzahl der Slave-Objekte (102a-102d) sich innerhalb der festgelegten Reichweite (108) befindet, und Signale (110) nur an diejenigen Slave-Objekte (102a-102d) sendet, von denen festgestellt wurde, dass sie sich innerhalb der festgelegten Reichweite (108) befinden.

15. Master-Objekt nach Anspruch 12, wobei der Sender und der Empfänger (116, 114 mit entweder dem RFID- oder dem Bluetooth-Protokoll arbeiten.

16. Master-Objekt nach Anspruch 12, wobei das Master-Objekt ein Zellulartelefon (104) umfasst.

17. In einem computerlesbaren Medium enthaltenes Computerprogrammprodukt, wobei das Computerprogrammprodukt computerlesbare Programmcodemittel zum Ausführen des Verfahrens nach Anspruch 1 umfasst.

## Revendications

1. Procédé pour suivre la proximité d'au moins un objet esclave (102a-102e) par rapport à un objet maître (104) associé à une personne, dans lequel le au moins un objet esclave comprend un premier et un second objets esclaves, le procédé comprenant les étapes suivantes :
(a) on équipe le maître (104) et au moins un objet esclave (102a-102e) d'un moyen de communication sans fil (116, 114, 136, 138) fonctionnant dans les limites d'une distance prédéterminée (108) de l'objet maître (104) ;
(b) on signale de manière périodique (110) le au moins un objet esclave (102a-102e) ;
(c) on détermine si le au moins un objet esclave (102a-102e) se trouve dans les limites de la distance prédéterminée (108) ;
(d) on avertit la personne si l'on a déterminé que le au moins un objet esclave (102a-102e) ne se situe pas dans les limites de la distance prédéterminée (108) ;
(e) on indique que le premier objet esclave (102e) peut être temporairement retiré hors des limites de la distance prédéterminée (108) ; et
(f) on avertit la personne que le premier objet esclave (102e) se situe hors des limites de la distance prédéterminée (108) de manière différente à la situation qui prévaut si le second objet esclave (102a-102d) se situe hors des limites de la distance prédéterminée (108).

2. Procédé selon la revendication 1, dans lequel l'étape (c) est basée sur le fait qu'une réponse (112) à la signalisation (110) est ou non reçue du au moins un objet esclave (102a-102e) ; comprenant en outre l'avertissement de la personne par l'objet maître (104) si l'on détermine que le au moins un objet esclave (102a-102e) ne se situe pas dans les limites de la distance prédéterminée (108).

3. Procédé selon la revendication 1, comprenant en outre l'indication d'au moins un objet additionnel comme objet esclave (102a-102e).

4. Procédé selon la revendication 1, comprenant en outre les étapes suivantes :
on détermine si le au moins un objet esclave (102a-102e) a reçu la signalisation (110) dans une période de temps prédéterminée ; et
on avertit la personne par le au moins un objet esclave (102a-102e) si l'on a déterminé que le au moins un objet esclave (102a-102e) n'a pas reçu la signalisation dans la période de temps prédéterminée.

5. Procédé selon la revendication 1, dans lequel le au moins un objet esclave (102a-102e) comprend une pluralité d'objets esclaves, le procédé comprenant en outre les étapes suivantes :
on détermine lequel de la pluralité d'objets esclaves (102a-102e) se situe dans les limites de la distance prédéterminée (108) ; et
on n'effectue les étapes (b) et (c) que pour les objets esclaves (102a-102e) que l'on a déterminés comme se situant dans les limites de la distance prédéterminée (108).

6. Système (100) pour suivre la proximité d'au moins un objet esclave (102a-102e) par rapport à un objet maître (104) associé à une personne, dans lequel le au moins un objet esclave comprend un premier et un second objets esclaves, le système comprenant les étapes suivantes :
le maître (104) et le au moins un objet esclave (102a-102e) comprenant chacun un moyen de communication sans fil (116, 114, 136, 138) fonctionnant dans les limites d'une distance prédéterminée (108) de l'objet maître (104) ; le moyen de communication sans fil (114, 116) de l'objet maître (104) comprenant un émetteur sans fil (114, 116) pour signaler de manière périodique (110) le au moins un objet esclave (102a-102e) ;
un processeur (116) pour déterminer si le au moins un objet esclave (102a-102e) se situe dans les limites de la distance prédéterminée (108) ;
un moyen d'avertissement (122, 120, 118) pour avertir la personne si l'on a déterminé que le au moins un objet esclave (102a-102e) ne se situe pas dans les limites de la distance prédéterminée (108) ;
un moyen (116, 126) pour indiquer que le premier objet esclave (102e) peut être temporairement retiré hors des limites de la distance prédéterminée (108) ; et
un moyen (118, 120, 122) pour avertir la personne que le premier objet esclave (102e) est hors des limites de la distance prédéterminée (108) de manière différente à la situation où le second objet esclave (102a-102d) se situe hors des limites de la distance prédéterminée (108).

7. Système (100) selon la revendication 6, l'objet maître (104) comprenant :
un récepteur sans fil (114) pour recevoir une réponse (112) au signal (110) ;
un processeur (116) pour déterminer si la réponse (112) est reçue du au moins un objet esclave (102a-102e) ; et
un moyen d'avertissement (122, 120, 118) pour avertir la personne si l'on a déterminé que la réponse (110) n'est pas reçue du au moins un objet esclave (102a-102e) ; et
le au moins un objet esclave (102a-102e) comprenant :
- un récepteur sans fil (136, 138) pour recevoir le signal (110) de l'objet maître (104) ; et
- un émetteur sans fil (136, 138) pour transmettre la réponse (112) à l'objet maître (104) si le signal (110) est reçu par le au moins un objet esclave (102a-102e).

8. Système selon la revendication 6, l'objet maître (104) comprenant en outre un moyen (116, 126) pour ajouter au moins un objet supplémentaire comme objet esclave (102a-102e).

9. Système selon la revendication 6, le au moins un objet esclave (102a-102e) comprenant en outre :
un processeur (138) pour déterminer si le au moins un objet esclave (102a-102e) a reçu le signal (110) dans une période de temps prédéterminée ; et
un moyen d'avertissement (140, 142) pour avertir la personne si l'on a déterminé que le au moins un objet esclave (102a-102e) n'a pas reçu le signal (110) dans la période de temps prédéterminée.

10. Système selon la revendication 6, dans lequel le au moins un objet esclave (102a-102e) comprend une pluralité d'objets esclaves (102a-102e) et le processeur (116) de l'objet maître (104) détermine lequel de la pluralité d'objets esclaves (102a-102e) se situe dans les limites de la distance prédéterminée (108) et ne transmet des signaux (110) qu'aux objets esclaves (102a-102d) que l'on a déterminés comme se situant dans les limites de la distance prédéterminée (108).

11. Système selon la revendication 8, dans lequel le au moins un objet esclave (102a-102e) comprend un premier et un second objets esclaves, l'objet maître (104) comprenant en outre :
un moyen (116, 126) pour indiquer que le premier objet esclave (102e) peut être temporairement retiré hors des limites de la distance prédéterminée (108) ; et
un moyen (118, 120, 122) pour avertir la personne que le premier objet esclave (102e) se situe hors des limites de la distance prédéterminée (108) de manière différente à la situation où le second objet esclave (102a-102d) se situe hors des limites de la distance prédéterminée (108).

12. Objet maître (104) pour suivre la proximité d'au moins un objet esclave (102a-102e), dans lequel le au moins un objet esclave comprend un premier et un second objets esclaves, l'objet maître (104) comprenant :
un émetteur sans fil (114, 116) fonctionnant dans les limites d'une distance prédéterminée (108) pour transmettre de manière périodique un signal (110) au au moins un objet esclave (102a-102e) ;
un récepteur sans fil (114, 116) pour recevoir une réponse (112) au signal (110) ; et
un processeur (116) pour déterminer si la réponse (112) est reçue du au moins un objet esclave (102a-102e) ; et
un moyen d'avertissement (118, 120, 122) pour avertir la personne si l'on a déterminé que la réponse (112) n'est pas reçue du au moins un objet esclave (102a-102e) ;
un moyen (116, 126) pour indiquer que le premier objet esclave (102e) peut être temporairement hors des limites de la distance prédéterminée (108) ; et
un moyen (118, 120, 122) pour avertir la personne que le premier objet esclave (102e) se situe hors des limites de la distance prédéterminée (108) de manière différente à la situation où le second objet esclave (102a-102d) est situé hors des limites de la distance prédéterminée (108).

13. Objet maître selon la revendication 12, comprenant en outre un moyen (116, 126) pour ajouter au moins un objet additionnel comme objet esclave (102a-102e).

14. Objet maître selon la revendication 12, dans lequel le au moins un objet esclave (102a-102e) comprend une pluralité d'objets esclaves et le processeur (116) détermine lequel de la pluralité d'objets esclaves (102a-102d) se situe dans les limites de la distance prédéterminée (108) et ne transmet des signaux (110) qu'aux objets esclaves (102a-102d) que l'on a déterminés comme se situant dans les limites de la distance prédéterminée (108).

15. Objet maître selon la revendication 2, dans lequel l'émetteur et le récepteur (116, 14) fonctionnent sur l'un des protocoles RFID ou Bluetooth.

16. Objet maître selon la revendication 12, dans lequel l'objet maître comprend un téléphone cellulaire (104).

17. Produit de programme informatique réalisé dans un support lisible sur ordinateur, le produit de programme informatique comprenant un moyen de codage de programme lisible sur ordinateur pour effectuer le procédé selon la revendication 1.
